# EUROPEAN PATENT APPLICATION

(11) **EP 4 360 445 A1**
(43) Date of publication of application: **01.05.2024**
(21) Application number: 22828050.9
(22) Date of filing: 08.04.2022
(51) Int. Cl.: A01G 7/00, A01C 1/00, A01C 1/02

(54) **PLANT CULTIVATION METHOD AND PLANT CULTIVATION DEVICE**

(30) Priority: 24.06.2021 JP 2021104917
(71) Applicant: FUJIFILM Corporation, Tokyo 106-8620 (JP)
(72) Inventor: HATTORI, Akiko, Ashigarakami-gun, Kanagawa 258-8577 (JP); HOSOKAWA, Takafumi, Ashigarakami-gun, Kanagawa 258-8577 (JP)
(74) Representative: Meissner Bolte Partnerschaft mbB
(86) International application number: PCT/JP2022/017413
(87) International publication number: WO 2022/270131

(57) **Abstract**

A method of cultivating a plant including a step of seeding a seed of the plant on a transparent medium and germinating and a step of evaluating and sorting the seed of the plant after a start of the germinating according to a germinating state, and a plant cultivation apparatus that can be used for the method of cultivating a plant.

## Description

### BACKGROUND OF THE INVENTION

### 1. Field of the Invention

The present disclosure relates to a method of cultivating a plant and a plant cultivation apparatus.

### 2. Description of the Related Art

In recent years, an artificial light type plant factory in which a plant such as a vegetable is cultivated by using a light source emitting artificial light such as a light emitting diode (LED) in a closed space is attracting attention.

Cultivation of plants in an artificial light type plant factory is not affected by the climate and the weather, and the problem of labor shortage can be solved. Therefore, plants can be cultivated throughout a year under certain conditions.

For example, JP4610695B discloses a method of cultivating a plant in an artificial light type plant factory.

Specifically, in an artificial light type plant factory, artificial lighting and an irrigation device are provided in each shelf of a multi-stage shelf. The above-described irrigation device has a shallow quadrangular box shape in an external form, and includes an irrigation feeder on one side wall surface of the box, a drain groove on opposite side wall surfaces of the box, a resin porous sheet laid on a bottom wall surface, and an automatic control device that intermittently irrigating from the irrigation feeder. A method of cultivating using a multi-stage shelf type seedling raising apparatus in which a plurality of cell trays filled with a culture medium for raising seedlings are placed on each shelf of the irrigation device, and irrigating can be performed intermittently from the tray bottom wall surface of each of the cell trays, is disclosed.

Various methods are disclosed as a method of germinating seeds to be used for raising seedlings. For example, in Bulletin of the Experimental Farm Faculty of Agricalture, Kagoshima University, vol. 29, pp. 1 to 3 (2006), a method of germinating seeds of a Cucurbitaceae family plant in water is disclosed.

### SUMMARY OF THE INVENTION

It is particularly important that cultivation of a plant in an artificial light type plant factory is carried out according to a plan, and it is required that plants of which cultivation is started at the same timing can be harvested at the same timing.

In the method of cultivating a plant disclosed in JP4610695B, an individual difference in a growth rate of the plant is large, and there is a possibility that cultivation cannot be performed according to a plan.

In addition, in Bulletin of the Experimental Farm Faculty of Agricalture, Kagoshima University, vol. 29, pp. 1 to 3 (2006), whether or not the seeds of a Cucurbitaceae family plant are germinated in water is confirmed and the cultivation of the plant according to the plan is not referred.

The present disclosure has been made in view of the above circumstances, and an object to be solved thereof is to provide a method of cultivating a plant and a plant cultivation apparatus, in which cultivation according to the plan is possible.

Specific means for achieving the object are as follows.
<1> A method of cultivating a plant, including a step of seeding a seed of the plant on a transparent medium and germinating and
   a step of evaluating and sorting the plant after a start of the germinating according to a germinating state.
<2> The method of cultivating a plant according to <1>, in which the transparent medium is a liquid.
<3> The method of cultivating a plant according to <2>, in which a temperature of the transparent medium, which is a liquid, is 10°C to 40°C.
<4> The method of cultivating a plant according to any one of <1> to <3>, in which in the step of evaluating and sorting the plant according to the germinating state, evaluation of growth and sorting are carried out based on a length of a radicle developed from the seed of the plant.
<5> The method of cultivating a plant according to any one of <1> to <4>, in which in the step of evaluating and sorting the plant according to the germinating state, an image of the plant in the germinating state is acquired and evaluation of growth and sorting are carried out based on a length of a radicle measured from the image.
<6> The method of cultivating a plant according to any one of <1> to <5>, in which in the step of evaluating and sorting the plant according to the germinating state, the plant in which a ratio of a length of a radicle to a length of a seed is 1/4 to 1/1 is sorted.
<7> The method of cultivating a plant according to any one of <1> to <6>, further including a step of raising seedlings of the plant sorted in the step of evaluating and sorting the plant according to the germinating state with artificial light.
<8> The method of cultivating a plant according to any one of <1> to <7>, in which the plant is a fruit vegetable plant.
<9> The method of cultivating a plant according to any one of <1> to <8>, in which the plant is a tomato or a melon.
<10> A plant cultivation apparatus including a germination equipment and a seedling raising equipment,
   in which the germination equipment includes a transparent medium for seeding a seed of a plant and an imaging device for confirming a germinating state of the plant, and
   the seedling raising equipment includes a light source that emits artificial light.
<11> The plant cultivation apparatus according to <10>, in which the germination equipment includes a container that accommodates the transparent medium, and
   the transparent medium is a liquid.

According to the present disclosure, it is possible to provide a method of cultivating a plant and a plant cultivation apparatus, in which cultivation according to the plan is possible.

### BRIEF DESCRIPTION OF THE DRAWINGS

Fig. 1 is a schematic front view of a plant in a germinating state.
Fig. 2 is a schematic cross-sectional view of a germination equipment and a seedling raising equipment provided in the same cultivation room.

### DESCRIPTION OF THE PREFERRED EMBODIMENTS

Hereinafter, embodiments for performing the present disclosure are described in detail. However, the present disclosure is not limited to the following embodiments. In the following embodiments, the components (including elements, steps, and the like) are not essential unless otherwise specified. The same applies to numerical values and ranges thereof, which do not limit the present disclosure.

In the present disclosure, a numerical range represented using "to" includes numerical values before and after "to" as a minimum value and a maximum value, respectively.

In a numerical range described in a stepwise manner in the present disclosure, an upper limit or a lower limit described in one numerical range may be replaced with an upper limit value or a lower limit value in another numerical range described in a stepwise manner. In addition, in a numerical range described in the present disclosure, an upper limit value or a lower limit value in the numerical range may be replaced with a value described in Examples.

In the present disclosure, a step such as raising seedlings included in the method of cultivating a fruit vegetable plant includes, in addition to a step independent of other steps such as cultivation of seedlings and germination of seeds, a step that achieves a desired effect of the step even in a case of not being clearly distinguished from the other step.

In the present disclosure, the "plant in a germinating state" means a plant that is in a state where either or both of a radicle and a germ have come out from a seed and before development of seed leaves.

In the present disclosure, the "radicle" means a root that germinates first from the seed and that grows into a main root.

In addition, in the present disclosure, the "length of the radicle" in a case where the radicle is bent means a length measured along a bent shape.

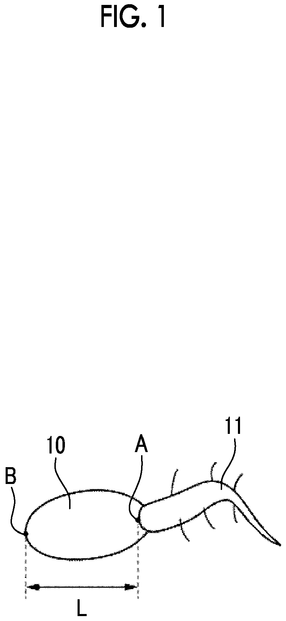

The length L of the seed means the distance between the development point A of the radicle and the point B at which the distance from the development point A of the radicle is maximum. In Fig. 1, a seed is denoted by reference numeral 10, and a radicle is denoted by reference numeral 11.

In the present disclosure, the "fruit vegetable plant" means a plant of which harvested product is a fruit.

In the present disclosure, the "transparent medium" may be a liquid or a solid.

In the present disclosure, "transparent medium" means a medium having an average transmittance of 70% or more at a wavelength of 400 nm to 1,100 nm, which is measured using a spectrophotometer.

In a case where the transparent medium is a liquid, the absorbance is measured using, for example, a square cell having an optical path length of 10 mm. On the other hand, in a case where the transparent medium is a solid, the medium is cut such that the thickness thereof is about 5 mm (about the same as the seeding depth) and measured.

The spectrophotometer is not particularly limited, but for example, U-3310 manufactured by Hitachi, Ltd. can be suitably used.

In the present disclosure, the "high temperature period" means a period during which the temperature of the transparent medium is higher than the average temperature during the germination period because of the use of a heater, air conditioning, or the like. In addition, in the present disclosure, the "low temperature period" means a period during which the temperature of the transparent medium is lower than the average temperature during the germination period because of the use of a heater, air conditioning, or the like.

The germination period means a period from seeding on the transparent medium until raising seedlings is started.

### [Method of cultivating plant]

A method of cultivating a plant of the present disclosure includes a step of seeding a seed of the plant on a transparent medium and germinating and a step of evaluating and sorting the plant after a start of the germinating according to a germinating state.

According to the method of cultivating of the present disclosure, cultivation of the plant according to the plan is possible.

Recently, the present inventors have found that a germination rate of a plant is correlated with a seedling raising rate and a cultivation rate after planting.

In the method of cultivating of the present disclosure, a germinating state of the plant is evaluated and sorted. It is presumed that since the germination rate is correlated with the seedling raising rate and the cultivation rate after planting, an individual difference in the seedling raising rate and the cultivation rate after planting of the sorted plants are small, and fruits and the like can be harvested at the same time, which makes it possible to carry out cultivation according to the plan.

In addition, a support such as rock wool for seeding seeds of a plant is usually opaque. Therefore, in a case where seeds are seeded on a support and germinated, it is not possible to confirm a rooting state at an initial stage of germination, and thus it takes a period of one week or more to confirm the germinating state. In the method of cultivating of the present disclosure, it is presumed that since seeds of a plant are seeded on a transparent medium, a germinating state can be always checked and the plant can be sorted at an early stage, which makes it possible to carry out cultivation according to the plan.

The reason why the above effect is exhibited is just presumption and is not limited thereto.

### (Germination step)

A method of cultivating a plant of the present disclosure includes a step of seeding a seed of the plant on a transparent medium and germinating.

The transparent medium may be a liquid or a solid. The transparent medium is preferably a liquid since a space required for germination of a plant can be reduced and space utilization efficiency can be improved.

In a case where a liquid transparent medium is used, a container such as a cup is prepared, the transparent medium is accommodated in the container, seeds of a plant are seeded in the container, and the seeds can be germinated in the container.

As the liquid transparent medium, water, a culture solution, or the like can be used. In addition, as the solid transparent medium, a support composed of a transparent resin such as a (meth)acrylic resin can be used. Among the above, from the viewpoints of transparency, germination efficiency, simplicity of work, and the like, water is preferable.

In a case where a liquid transparent medium is used, from the viewpoint of germination efficiency, the temperature conditions of the transparent medium are preferably controlled in a high temperature period and a low temperature period in some crops or varieties. In addition, the temperature condition is preferably controlled to a constant temperature in some crops or varieties.

The temperature conditions of the transparent medium can be controlled by using a known air conditioning equipment in the related art. Specifically, by controlling the environmental temperature in which the transparent medium is installed using an air conditioning equipment, the temperature of the transparent medium can be controlled because of the change in the environmental temperature.

In addition, the temperature conditions of the transparent medium can also be controlled by using a heating device such as a heater or the like installed in the vicinity of the container or in the container.

From the viewpoint of germination efficiency, the transparent medium, which is a liquid, is preferably 10°C to 40°C.

In a case where the temperature conditions of the transparent medium, which is a liquid, are controlled in the high temperature period and the low temperature period, from the viewpoint of germination efficiency, the temperature of the transparent medium in the high temperature period is preferably 20°C to 40°C, more preferably 25°C to 30°C, and even more preferably 26°C to 28°C.

In addition, from the viewpoint of germination efficiency, the temperature of the transparent medium in the low temperature period is preferably 15°C to 30°C, more preferably 15°C to 25°C, and even more preferably 17°C to 23°C.

In a case where the temperature condition of the transparent medium, which is a liquid, is controlled to be constant, from the viewpoint of germination efficiency, the temperature of the transparent medium is preferably 20°C to 40°C, more preferably 25°C to 30°C, and even more preferably 26°C to 28°C.

The temperature of the transparent medium is measured by disposing a thermometer in the transparent medium 10 mm away from the seeds. As the thermometer, for example, a temperature sensor E52 manufactured by OMRON Corporation can be used.

From the viewpoint of germination efficiency, a ratio (the period of the low temperature period/the period of the high temperature period) of the period of the low temperature period to the period of the high temperature period is preferably 0.01 to 3 and more preferably 0.1 to 2.

In a case where a liquid transparent medium is used, from the viewpoint of germination efficiency, it is desirable that the seeds are seeded in a container having a bottom area such that the seeds do not overlap each other.

Specifically, the bottom area of the container with respect to the number of seeds (unit: grains) seeded in the container is preferably 0.1 cm²/grain to 100 cm²/grain and more preferably 0.5 cm²/grain to 10 cm²/grain.

In addition, a ratio (the amount of water of the transparent medium/the total mass of the seeds of the plant to be seeded) of the amount (mass) of water of the transparent medium to the total mass of the seeds of the plant to be seeded is preferably 1 to 10,000 and more preferably 100 to 1,000.

In a case where a liquid transparent medium is used, from the viewpoint of germination efficiency, the dissolved oxygen concentration of the transparent medium is preferably 5 mg/l to 12 mg/l and more preferably 7 mg/l to 10 mg/l.

In the present disclosure, the dissolved oxygen concentration of the transparent medium is measured by using a dissolved oxygen concentration meter (for example, DOP-01 manufactured by Automatic System Research. Co., Ltd) in the transparent medium at any five points during the germination period.

In a case where the temperature conditions of the transparent medium are controlled in the high temperature period and the low temperature period, the above-described optional five points include at least one point of each of the high temperature period and the low temperature period.

The dissolved oxygen concentration meter can be disposed and used in a container in which a transparent medium is accommodated.

The type of the plant is not particularly limited as long as the plant can be germinated in water, and the plant may be a fruit vegetable plant, a root vegetable plant, or a leaf vegetable plant.

Among the above, a fruit vegetable plant is preferable, and the reason is described below.

First, the fruit vegetable plant has a longer period (cultivation period) from seeding to harvesting as compared with a leaf vegetable plant and the like, and individual difference in growth rate are likely to occur. According to the method of cultivating of the present disclosure, since an individual difference in the growth rate can be reduced, the fruit vegetable plant is suitable as a plant to be cultivated.

In addition, according to the method of cultivating of the present disclosure, since the individual difference in the growth rate can be reduced, the fruits that are unavoidable to be harvested before being sufficiently grown are reduced, and the total mass of the fruits harvested in the same period can be increased.

In addition, a mass per fruit can be increased by raising seedling and cultivating after planting the fruit vegetable plant sorted by the method of cultivating of the present disclosure. As the reason why the mass per fruit is increased, it is presumed that it is possible to prevent a situation in which sufficient light does not reach a slow-growth plant because of leaves of the fast-growth plant or the like.

Furthermore, from the same reason as the reason why the mass per fruit can be increased, it is possible to improve a color, a sugar content, and the like of the harvested fruit.

Examples of the fruit vegetable plant include Solanaceae family plants such as tomato and a sweet pepper, Cucurbitaceae family plants such as a melon, Fabaceae family plants such as a green bean, a soybean, a pea, and a broad bean, and the like.

Among the above-described fruit vegetable plants, from the viewpoint of water germination rate and the like, the Solanaceae family plants and Cucurbitaceae family plants are suitable for the method of cultivating of the present disclosure, and a tomato or a melon is more suitable.

The tomato includes a large size tomato, a medium size tomato, a cherry tomato, a high-sugar tomato, and the like. In addition, the melon includes netted melons such as green flesh and orange flesh, and non-netted melons.

Examples of the root vegetable plant include Brassicaceae family plants such as radish and rape blossoms, and Apiaceae family plants such as a carrot. Furthermore, in addition to the above, Poaceae family plants such as rice may be used.

### (Evaluation and sorting step)

The method of cultivating a plant of the present disclosure includes a step of evaluating a germinating state of a plant after start of germination and sorting. For example, the growth of the plant can be evaluated based on the length of the radicle, the colors of the seed and the radicle, the thickness of the radicle, and the like, and sorted.

Among the above, it is preferable to evaluate the growth of the plant in the germinating state and to sort based on the length of the radicle.

By evaluating the growth of the plant in germinating state and sorting based on the length of the radicle, an individual difference in the seedling raising rate and the cultivation rate after planting of the plant can be reduced, and it is possible to carry out cultivation according to the plan.

In addition, it is more preferable to evaluate the growth of the plant in the germinating state and sort, based on at least one of the length of the radicle, or the colors of the seeds and the radicle and the thickness of the radicle, and it is even more preferable to evaluate the growth of the plant in the germinating state and sort, based on the length of the radicle, the colors of the seed and the radicle, and the thickness of the radicle.

An appropriate time for the evaluation and the sorting of plants in a germinating state differs depending on the crop, the variety, the germination conditions, or the like, but it is preferable to carry out the evaluation and the sorting when the length of the radicle with respect to the length of the seed becomes more than 1/2 times, and it is more preferable to carry out when it becomes 1 to 3 times.

In a case where a plurality of seeds are seeded and germinated, the above-described evaluation and the determination of the start time of the sorting based on the length of the radicle with respect to the length of the seed are preferably carried out using a plant having the longest radicle.

Specifically, in a case where the type of the plant is a tomato, it is preferable to carry out in about 2 days to 7 days after seeding and more preferably in about 3 days to 5 days after seeding.

In addition, the number of plants to be sorted is not particularly limited, and it is preferable to appropriately adjust the number of plants in consideration of the environment in which the seedling raising step is carried out.

In one embodiment, it is possible to acquire an image of a plant in a germinating state, and to evaluate growth of the plant in the germinating state and sort based on the length of the radicle or the thickness of the radicle, which are measured from the image. The image can be acquired by an imaging apparatus installed in the vicinity of a transparent medium in which seeds are seeded. As the imaging apparatus, a well-known camera in the related art or the like can be used.

By using the imaging apparatus, it is possible to shorten the time required for the evaluation and sorting of plants in the germinating state, to reduce the labor, to improve the measurement accuracy, and the like.

In the evaluation of the growth of the plant in the germinating state and sorting based on the length of the radicle, evaluation and sorting may be carried out by measuring the length of the radicle, or evaluation and sorting may be carried out by obtaining a ratio (the length of the radicle/the length of the seed) of the length of the radicle to the length of the seed.

In a case where evaluation and sorting are carried out based on the ratio of the length of the radicle to the length of the seed, it is preferable to sort a plant in which the ratio of the length of the radicle to the length of the seed is 1/3 to 3/1, and it is more preferable to sort a plant having the rate of 2/3 to 5/3.

By sorting a plant in which the ratio of the length of the radicle to the length of the seed is 1/3 to 3/1, an individual difference in the seedling raising rate and the cultivation rate after planting of the plant can be reduced, and it is possible to carry out cultivation according to the plan.

In a case where the plant is a tomato and a plant in the germinating state is evaluated and sorted based on the length of the radicle, it is preferable to sort a plant having the length of the radicle of 1 mm to 9 mm and it is more preferable to sort a plant having the length of the radicle of 2 mm to 5 mm. By sorting a plant in which the length of the radicle is 2 mm to 5 mm, an individual difference in the seedling raising rate and the cultivation rate after planting of the plant can be reduced, and it is possible to carry out cultivation according to the plan.

In a case where the plant is a melon and a plant in the germinating state is evaluated and sorted based on the length of the radicle, it is preferable to sort a plant having the length of the radicle of 3 mm to 27 mm and it is more preferable to sort a plant having the length of the radicle of 6 mm to 15 mm. By sorting a plant in which the length of the radicle is 6 mm to 15 mm, an individual difference in the seedling raising rate and the cultivation rate after planting of the plant can be reduced, and it is possible to carry out cultivation according to the plan.

In a case where the growth of the plant in the germinating state is evaluated and the plants are sorted based on the colors of the seed and the radicle, it is preferable to sort plants in which the seeds are not discolored to dark brown or black, and the radicle is not discolored to blown or the like. The discolored seeds and radicles may cause root rot or the like. By sorting seeds and radicles which are not discolored, mixing of the poor growth plant can be prevented, and an individual difference in the seedling raising rate and the cultivation rate after planting of the plant can be reduced, and it is possible to carry out cultivation according to the plan.

In the evaluation of the growth of the plant in the germinating state and sorting based on the thickness of the radicle, evaluation and sorting may be carried out by measuring the thickness of the center portion of the radicle. The average value of the thickness of the center portion of the radicle is calculated in the germinated seed, and a plant having the thickness of the center portion of the radicle more than the average value may be sorted.

In the present disclosure, the "center portion of the radicle" means a thickness at the center point of the length of the radicle.

In a case where the plant is a tomato and evaluation and sorting are carried out based on the thickness of the center portion of the radicle, it is preferable to sort a plant having the thickness of the center portion of the radicle of 0.1 mm to 1.0 mm and it is more preferable to sort a plant having the thickness of 0.2 mm to 0.5 mm. By sorting a plant in which the thickness of the center portion of the radicle is 0.1 mm to 1.0 mm, an individual difference in the seedling raising rate and the cultivation rate after planting of the plant can be reduced, and it is possible to carry out cultivation according to the plan.

In a case where the plant is a melon and evaluation and sorting are carried out based on the thickness of the center portion of the radicle, it is preferable to sort a plant having the thickness of the center portion of the radicle of 0.1 mm to 2.0 mm and it is more preferable to sort a plant having the thickness of 0.2 mm to 1.0 mm. By sorting a plant in which the thickness of the center portion of the radicle is 0.1 mm to 2.0 mm, an individual difference in the seedling raising rate and the cultivation rate after planting of the plant can be reduced, and it is possible to carry out cultivation according to the plan.

As a preferred example of the method of evaluating the growth of a plant in a germinating state and sorting, a method including the following steps (1) to (4) is shown, but the present invention is not limited thereto.
(1) Excluding a plant in which a seed or radicle is discolored.
(2) After the sorting in (1), excluding a plant in which a ratio of the length of the radicle to the length of the seed is less than 1/3 or more than 3/1.
(3) After the sorting in (2), measuring the thickness of the center portion of the radicle of each of the plants in the germinating state, calculating the average value thereof, and excluding a plant in which the thickness of the center portion of the radicle is not more than the average value.
(4) From the plants which have not been excluded according to (1) to (3), sorting plants in the order of longest radicle.

The sorting described above may be carried out manually, or may be carried out by a device in which the sorting criteria are programed.

### (Seedling raising step)

The method of cultivating a plant of the present disclosure can further include a step of raising seedlings of the plant sorted in the step of evaluating and sorting the plant after the start of germination according to a germinating state, with artificial light.

The raising seedlings of a plant can be carried out by a known method in the related art, and may be carried out by a hydroponic method or a soil culture method.

In a case where a liquid transparent medium is used in the germination step, raising seedlings can be carried out by planting a plant after the start of germination on the support and arranging the supports on a D tray, a seedling raising panel, or the like.

In a case where a solid transparent medium is used in the germination step, the solid transparent medium can be arranged on a D tray, a seedling raising panel, or the like to raise seedlings.

The support is not particularly limited, and a support table or the like provided with a urethane sponge, a phenol resin sponge, a rock wool, or a water-retaining sheet can be used.

A light source used for the irradiation with the artificial light is not particularly limited, and an LED, a fluorescent lamp, or the like can be used.

In addition, from the viewpoint of space utilization efficiency, the germination step is preferably carried out in the same cultivation room as either or both of the seedling raising step and the cultivation step after planting.

From the viewpoint of seedling raising efficiency, raising seedlings of a plant is preferably performed in an environment in which one or more conditions selected from the group consisting of temperature, relative humidity, light, and carbon dioxide concentration are controlled.

Examples of the temperature conditions include a light period temperature, a dark period temperature, and the like.

From the viewpoint of seedling raising efficiency, raising seedlings of the plant is preferably carried out in an environment in which the light period temperature is controlled to 25°C to 30°C, and more preferably in an environment in which the light period temperature is controlled to 26°C to 28°C.

In addition, from the viewpoint of seedling raising efficiency, raising seedlings of the plant is preferably carried out in an environment in which the dark period temperature is controlled to 15°C to 25°C, and more preferably in an environment in which the dark period temperature is controlled to 17°C to 23°C.

The light period temperature and the dark period temperature are measured in a state where a thermometer is disposed at a position 1 cm away from a plant in which seedling is raised. As the thermometer, for example, a temperature/humidity sensor THA-3151 manufactured by T&D Corporation can be used.

In the present disclosure, the "light period" means a period during which the plant is subjected to irradiation with light by the light source. In addition, in the present disclosure, the "dark period" means a period during which the plant is not subjected to irradiation with light by the light source.

A method of controlling the light period temperature and the dark period temperature is not particularly limited and the light period temperature and the dark period temperature can be controlled by using a known method in the related art. For example, the controlling of the light period temperature and the dark period temperature can be performed by monitoring the light period temperature and the dark period temperature of the environment for raising seedlings of the plant with the above-described thermometer, and sending hot air or cold air as necessary.

From the viewpoint of seedling raising efficiency, raising seedlings of the plant is carried out in an environment in which the relative humidity is controlled to preferably 60% to 80% and more preferably 63% to 77%.

The relative humidity is measured in a state where a hygrometer is disposed at a position 1 cm away from a plant in which seedling is raised. As the hygrometer, for example, a temperature/humidity sensor THA-3151 manufactured by T&D Corporation can be used.

A method of controlling the humidity is not particularly limited, and the humidity can be controlled by a known method in the related art. For example, the controlling of the humidity condition can be performed by monitoring the humidity of the environment for raising seedlings of the plant with the above hygrometer and using, as necessary, an air conditioning device having a humidifying function and a dehumidifying function.

### Examples of the light condition include light intensity, light-dark cycle, and the like.

From the viewpoint of seedling raising efficiency, the light intensity is preferably 100 µmol/m²·s to 400 µmol/m²·s and more preferably 180 µmol/m²·s to 300 µmol/m²·s.

The light intensity is measured in a state where on a surface (hereinafter, referred to as a planting surface) of a support in which a plant is planted, a light-receiving surface of a measuring instrument is disposed toward the light source. As the measuring instruments, for example, a light analyzer (manufactured by Nippon Medical & Chemical Instruments Co., Ltd., LA105) or the like can be used. In a case where the light sources are disposed in two or more directions from the seeds, the sum of the light intensities measured by disposing the measuring instrument toward respective light sources is defined as the light intensity.

In addition, from the viewpoint of seedling raising efficiency, a ratio (light period time/dark period time) of the light period time to the dark period time is preferably 0.3 to 3 and more preferably 0.5 to 2.

The light intensity can be controlled by changing a type, the number, or the like of the light source (LED, fluorescent lamp, or the like) used. In addition, the light-dark cycle can be controlled by changing the use time of the light source.

From the viewpoint of seedling raising efficiency, the carbon dioxide concentration is preferably 300 ppm to 5,000 ppm and more preferably 500 ppm to 1,500 ppm.

The carbon dioxide concentration is measured by disposing a carbon dioxide densitometer at a position which is a height of ± 1 cm of a planting surface of a plant and is 1 cm away from a plant of which seedlings are to be raised.

In addition, in a case where the seedling raising equipment is a multi-stage shelf and seedlings of plants are raised in each stage, the concentration of carbon dioxide is measured by disposing a carbon dioxide densitometer at a position which is a height of ± 1 cm of the planting surface of the plant provided in each stage and 1 cm away from a plant of which seedlings are to be raised.

As the carbon dioxide densitometer, for example, LI-850 manufactured by LI-COR, Inc. can be used.

The method of controlling the carbon dioxide concentration is not particularly limited, and the carbon dioxide concentration can be controlled by a known method in the related art. For example, the carbon dioxide concentration can be adjusted by monitoring the carbon dioxide concentration in the environment with the above-described carbon dioxide densitometer and supplying carbon dioxide from the carbon dioxide cylinder or the like, as necessary.

A seedling raising period of the plant is not particularly limited, and can be, for example, 15 days to 25 days.

### (Cultivation after planting of plant)

The method of cultivating a plant of the present disclosure can further include planting the plant obtained by raising seedlings and cultivating the plant after the planting.

The cultivation of the plant after planting can be carried out by a known method in the related art, and may be carried out by hydroponic cultivation or soil cultivation.

A cultivation facility is not particularly limited, and examples thereof include an artificial light type plant factory, a solar type plant factory, a greenhouse, and the like.

From the viewpoint of cultivation efficiency, cultivation after planting of a plant is preferably performed in an environment in which one or more conditions selected from the group consisting of temperature, relative humidity, light, and carbon dioxide concentration are controlled.

Since the preferred numerical ranges of the temperature, the relative humidity, the light, and the carbon dioxide concentration are the same as those in the seedling raising step, the description thereof is omitted here.

In the cultivation of a plant after planting, as necessary, it is preferable to carry out pinching, defoliation, fruit thinning, removal of lateral buds (lateral bud nipping), hanging attraction, or the like.

"Pinching" means picking a germ at a growth point of a fruit vegetable plant and stopping a growth of the stem.

A cultivation period after planting is not particularly limited, and can be, for example, 60 days to 150 days.

### <Plant cultivation apparatus>

A plant cultivation apparatus of the present disclosure includes a germination equipment and a seedling raising equipment, in which the germination equipment includes a transparent medium for seeding a seed of a plant and an imaging apparatus for confirming a germinating state of the seed of the plant, and the seedling raising equipment includes a light source that emits artificial light.

The plant cultivation apparatus of the present disclosure may further include a cultivation equipment for cultivating a plant after planting.

According to the plant cultivation apparatus of the present disclosure, cultivation of the plant according to the plan is possible.

A germination equipment included in the cultivation apparatus of the present disclosure includes a transparent medium for seeding a seed of a plant and an imaging apparatus for confirming a germinating state of the seed of the plant, and is used for the above-described method of cultivating a plant. Therefore, it is presumed that cultivation of a plant according to the plan can be performed.

In a case where the transparent medium is a liquid, the germination equipment can include a container that accommodates the transparent medium. In addition, the germination equipment can include a light shielding substrate or the like that covers the container. In a case where the germination equipment includes the light shielding substrate or the like that covers the container, it is possible to prevent artificial light irradiation from a light source included in the seedling raising equipment provided in the same cultivation room.

The seedling raising equipment includes a light source that emits artificial light. In addition, the seedling raising equipment can include a support for planting a plant in a germinating state, a panel holding the support, a culture solution tank for accommodating a culture solution, and the like.

A cultivation equipment for cultivating a plant after planting includes a light source that emits artificial light. In addition, the cultivation equipment can include a support for planting a plant after raising seedlings, a panel holding the support, a culture solution tank for accommodating a culture solution, and the like.

The support included in the cultivation equipment may be the same support as in the seedling raising equipment.

From the viewpoint of space utilization efficiency, it is preferable that the germination equipment used in the germination step and the seedling raising equipment used in the seedling raising step are provided in the same cultivation room. In addition, it is preferable that the cultivation equipment for cultivating a plant after planting is provided in the same cultivation room as the germination equipment and the seedling raising equipment.

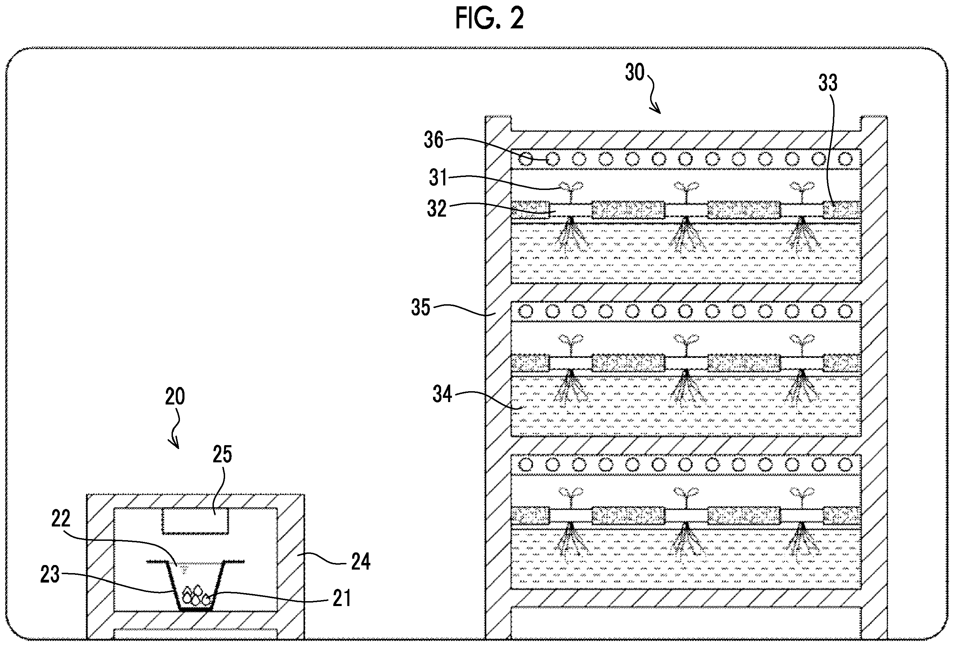

In a case where germination equipment used in the germination step and seedling raising equipment used in the seedling raising step are provided in the same cultivation room, it is described below with reference to Fig. 2, but the present invention is not limited thereto.

Fig. 2 is a schematic cross-sectional view showing an embodiment of a germination equipment 20 and a seedling raising equipment 30 provided in the same cultivation room.

The germination equipment 20 includes a container 23 in which a transparent medium 22, which is a liquid, is accommodated and in which seeds 21 of a plant are seeded, a light shielding substrate 24 that covers the container 23, and an imaging apparatus 25 for acquiring an image of the seeds 21 of the plant.

The seedling raising equipment 30 includes a support 32 in which a plant 31, which is germinated in the germination equipment 20 shown in Fig. 2, and which is evaluated and sorted, is planted, a panel 33 that holds the support 32, a culture solution tank 35 that accommodates a culture solution 34, and a light source 36 that irradiates a plant 31 or the like with artificial light.

In addition, the germination equipment 20 may be a multi-stage shelf.

### Examples

Hereinafter, the above-described embodiment will be specifically described with reference to Examples, but the above-described embodiment is not limited to these Examples.

### <Example 1-1>

80 grains of tomato seeds (variety: Momotaro York (registered trademark), TAKII & Co., Ltd) were seeded in a polypropylene disposable cup (capacity of 500 ml, bottom area of 48 cm²) accommodating 200 ml of pure water.

A disposable cup in which tomato seeds were seeded was covered with a light-shielding film to be under darkness and allowed to stand for 3 days under the following conditions to obtain a tomato plant in a germinating state. The temperature of the pure water was adjusted by using air conditioning equipment provided in the cultivation room.

### (Germination conditions)

- Temperature of pure water in high temperature period: 27°C
- Temperature of pure water in low temperature period: 19°C
- Ratio (period of low temperature period/period of high temperature period) of period of low temperature period to period of high temperature period: 8 hours/16 hours

40 strains of tomato plants were sorted from tomato plants in a germinating state based on the following sorting criteria.

### (Sorting criteria)

(1) Excluding a tomato plant in which a seed or a radicle is discolored (brown or the like)
(2) After the sorting in (1), excluding a tomato plant in which a ratio of the length of the radicle to the length of the seed of the tomato plant is less than 2/3 or more than 5/3.
(3) After the sorting in (2), measuring the thickness of the center portion of the radicle of each of the tomato plants in the germinating state, calculating the average value thereof, and excluding a tomato plant in which the thickness of the center portion of the radicle is not more than the average value.
(4) From the seeds which have not been excluded according to (1) to (3), sorting 40 strains of the tomato plants in a germinating state, in the order of longest radicle.

Each of the sorted 40 strains of the tomato plants was planted on a support, and raising seedlings was carried out for 20 days by a flooded hydroponic method under the following conditions. The raising seedlings of the tomato plant was carried out in the cultivation room where germination was carried out.

### (Seedling raising conditions)

- Support: urethane sponge, manufactured by Kyowa Co., Ltd., yellow culture medium for fruit vegetable
- Light source: white LED (PGL-NE-200NWD), manufactured by Ryoden Corporation
- Light intensity: 250 µmol/m²·s
- Light-dark cycle (light period/dark period): 16 hours/8 hours
- Temperature: 27°C (light period), 19°C (dark period)
- Relative humidity: 70%
- Carbon dioxide concentration: 1,000 ppm
- Culture solution: "Hyponica liquid fertilizer" manufactured by Kyowa Co., Ltd. was used by being diluted with 500 mass of pure water
- Distance between strains: 15 cm

The tomato plant after raising seedlings was planted on a D tray together with the support, and cultivation was carried out for 120 days by a drip hydroponic method under the following conditions. The cultivation after planting of the tomato plant was carried out in a cultivation room where germination and raising seedlings were carried out.

### (Cultivation conditions)

- Light source: white LED (PGL-NE-200NWD), manufactured by Ryoden Corporation
- Light intensity: 250 µmol/m²·s
- Light-dark cycle (light period/dark period): 16 hours/8 hours
- Temperature: 27°C (light period), 19°C (dark period)
- Relative humidity: 70%
- Carbon dioxide concentration: 1,000 ppm
- Culture solution: "Hyponica liquid fertilizer" manufactured by Kyowa Co., Ltd. was used by being diluted with 500 mass of pure water
- Distance between strains: 17 cm

### <Comparative Example 1-1>

40 grains of tomato seeds (variety: Momotaro York (registered trademark), TAKII & Co., Ltd) were seeded on a support (urethane sponge, manufactured by Kyowa Co., Ltd., yellow culture medium for fruit vegetable), and the support was arranged on a vat. Next, the vat was filled with 2,000 ml of pure water.

The vat was covered with a light-shielding film to be under darkness and allowed to stand for 3 days under the same conditions as in Example 1-1 to obtain a tomato plant in a germinating state.

The tomato plant in the germinating state was cultivated after raising seedlings and planting in the same manner as in Example 1-1 without being subjected to evaluation and sorting.

### <Evaluation of individual difference after raising seedlings>

A state of the tomato plant after raising seedlings of Example 1-1 and Comparative Example 1-1 was visually observed, and the individual difference in the growth rate (seedling raising rate) of the tomato plant was confirmed.

In addition, the budding of the tomato plant 30 days after seeding of Example 1-1 and Comparative Example 1-1 was visually observed, and the individual difference in the growth rate (cultivation rate after planting) of the tomato plant was confirmed.

The results are as follows, and it was found that the individual difference in the growth rate is small in Example 1-1, whereas the individual difference in the growth rate is large in Comparative Example 1-1. In Example 1-1, the number of leaves of the tomato plant was more than 3 in all 40 strains, and there was no tomato plant having poor growth, whereas in Comparative Example 1-1, there were five strains of the tomato plants having poor growth, in which the number of leaves was 2 or less.

### (Confirmation result of seedling raising rate)

- Plant height: in Example 1-1, the plant height of the tomato plant was 10 cm to 13 cm, whereas in Comparative Example 1-1, the plant height of the tomato plant was 3 cm to 15 cm.
- Number of main leaves: in Example 1-1, the number of main leaves of the tomato plant was 6 in all 40 strains, whereas in Comparative Example 1-1, the number of main leaves of the tomato plant was 0 to 7.

### (Confirmation result of cultivation rate after planting)

· Budding: in Example 1-1, budding was confirmed in all 40 strains of tomato plants, whereas in Comparative Example 1-1, budding was confirmed of only 32 strains of the tomato plants.

### <Measurement of mass of fruit harvested from one strain and mass per fruit>

As a result of obtaining the average values of the total fruit mass harvested from one strain of tomato plant after cultivation after planting of Example 1-1 and Comparative Example 1-1, the average values were about 1,200 g and about 900 g, respectively. It was found that according to the method of cultivating according to Example 1-1, the total mass of the fruit harvested from one strain of the tomato plant was improved.

In addition, as a result of obtaining the average values of the masses per fruit, the average values were about 120 g and about 100 g, respectively. According to the method of cultivating according to Example 1-1, the mass per fruit was improved.

### <Example 2-1>

Germination, evaluation and sorting, raising seedlings, and cultivation after planting were carried out in the same manner as in Example 1-1, except that tomato seeds were changed to melon seeds (variety: RENON (registered trademark), TAKII & Co., Ltd).

### <Comparative Example 2-1>

Germination, raising seedlings, and cultivation after planting were carried out in the same manner as in Comparative Example 1-1, except that tomato seeds were changed to melon seeds (variety: RENON (registered trademark), TAKII & Co., Ltd).

### <Evaluation of individual difference after raising seedlings>

A state of the melon plant after raising seedlings of Example 2-1 and Comparative Example 2-1 was visually observed, and the individual difference in the growth rate (seedling raising rate) of the melon plant was confirmed.

In addition, the budding of the melon plant 30 days after planting of Example 2-1 and Comparative Example 2-1 was visually observed, and the individual difference in the growth rate of the melon plant was confirmed. The results are as follows, and it was found that the individual difference in the growth rate (cultivation rate after planting) is small in Example 2-1, whereas the individual difference in the growth rate is large in Comparative Example 2-1.

In Example 2-1, the number of leaves of the melon plant was more than 3 in all 40 strains, and there was no melon plant having poor growth, whereas in Comparative Example 2-1, there were four strains of the melon plants having poor growth, in which the number of leaves was 2 or less.

### (Confirmation result of seedling raising rate)

- Plant height: in Example 2-1, the plant height of the melon plant was 15 cm to 18 cm, whereas in Comparative Example 2-1, the plant height of the melon plant was 3 cm to 20 cm.
- Number of main leaves: in Example 2-1, the number of main leaves of the melon plant was 6 in all 40 strains, whereas in Comparative Example 2-1, the number of main leaves of the melon plant was 0 to 7.

### (Confirmation result of cultivation rate after planting)

· Budding: in Example 2-1, budding was confirmed in all 40 strains of melon plants, whereas in Comparative Example 2-1, budding was confirmed of only 32 strains of the melon plants.

### <Measurement of total mass of fruits harvested from one strain and mass per fruit>

As a result of obtaining the average values of the total fruit mass harvested from one strain of melon plant after cultivation after planting of Example 2-1 and Comparative Example 2-1, the average values were about 1,800 g and about 1,400 g, respectively. It was found that according to the method of cultivating according to Example 2-1, the total mass of the fruit harvested from one strain of the melon plant was improved.

In addition, as a result of obtaining the average values of the masses per fruit, the average values were about 1,300 g and about 1,000 g, respectively. According to the method of cultivating according to Example 2-1, the mass per fruit was improved.

From the above, in Examples according to the method of cultivating of the present disclosure, it was found that the individual difference in the growth rate was small, and cultivation according to the plan was possible.

In addition, in Examples according to the method of cultivating of the present disclosure, it was found that the total mass of the fruits and the mass per fruit harvested from one strain of the tomato plant or the melon plant were improved.

The disclosure of Japanese Patent Application No. 2021-104917 filed on June 24, 2021 is incorporated herein by reference in its entirety. All documents, patent applications, and technical standards disclosed in this specification are incorporated in this specification by reference such that the incorporation of each of the documents, the patent applications, and the technical standards by reference is specific and is as detailed as each of the documents, the patent applications, and the technical standards.

## Claims

1. A method of cultivating a plant, comprising:
a step of seeding a seed of the plant on a transparent medium and germinating; and
a step of evaluating and sorting the plant after a start of the germinating according to a germinating state.

2. The method of cultivating a plant according to claim 1,
wherein the transparent medium is a liquid.

3. The method of cultivating a plant according to claim 2,
wherein a temperature of the transparent medium, which is a liquid, is 10°C to 40°C.

4. The method of cultivating a plant according to any one of claims 1 to 3,
wherein in the step of evaluating and sorting the plant according to the germinating state, evaluation of growth and sorting are carried out based on a length of a radicle developed from the seed of the plant.

5. The method of cultivating a plant according to any one of claims 1 to 4,
wherein in the step of evaluating and sorting the plant according to the germinating state, an image of the plant in the germinating state is acquired and evaluation of growth and sorting are carried out based on a length of a radicle measured from the image.

6. The method of cultivating a plant according to any one of claims 1 to 5,
wherein in the step of evaluating and sorting the plant according to the germinating state, the plant in which a ratio of a length of a radicle to a length of a seed is 1/4 to 1/1 is sorted.

7. The method of cultivating a plant according to any one of claims 1 to 6, further comprising:
a step of raising seedlings of the plant sorted in the step of evaluating and sorting the plant according to the germinating state with artificial light.

8. The method of cultivating a plant according to any one of claims 1 to 7,
wherein the plant is a fruit vegetable plant.

9. The method of cultivating a plant according to any one of claims 1 to 8,
wherein the plant is a tomato or a melon.

10. A plant cultivation apparatus comprising:
a germination equipment; and
a seedling raising equipment,
wherein the germination equipment includes a transparent medium for seeding a seed of a plant and an imaging device for confirming a germinating state of the plant, and
the seedling raising equipment includes a light source that emits artificial light.

11. The plant cultivation apparatus according to claim 10,
wherein the germination equipment includes a container that accommodates the transparent medium, and
the transparent medium is a liquid.
